# EUROPÄISCHE PATENTANMELDUNG

(11) **EP 1 770 491 A2**
(43) Veröffentlichungstag der Anmeldung: **04.04.2007**
(21) Anmeldenummer: 06013331.1
(22) Anmeldetag: 28.06.2006
(51) Int. Cl.: G06F 3/06

(54) **Tragbarer Datenträger**

(30) Priorität: 11.07.2005 DE 102005032310
(71) Anmelder: Giesecke & Devrient GmbH, 81677 München (DE)
(72) Erfinder: Spitz, Stephan, Dr., 81245 München (DE); Hinz, Walter, Dr., 85748 Garching (DE)

(57) **Zusammenfassung**

Die Erfindung betrifft einen tragbaren Datenträger (1), der eine Prozessoreinheit (5) zur Ausführung von Programmcode, wenigstens eine Ein/ Ausgabeeinheit (6, 22) wenigstens zum Empfang von Daten und ein Betriebssystem (10) zur Verwaltung mehrerer nebeneinander bestehender Ausführungspfade (14, 15, 16) zur Ausführung von Programmcode durch die Prozessoreinheit (5) aufweist. Der erfindungsgemäße tragbare Datenträger (1) zeichnet sich dadurch aus, dass durch die wenigstens eine Ein/ Ausgabeeinheit (6, 22) mehrere Kommunikationskanäle (7, 8, 9) bereitgestellt werden, für die je ein Ausführungspfad (14, 15, 16) vorgesehen ist.

## Beschreibung

Die Erfindung betrifft einen tragbaren Datenträger. Weiterhin betrifft die Erfindung ein Betriebssystem für einen tragbaren Datenträger und ein Verfahren zum Betreiben eines tragbaren Datenträgers.

Tragbare Datenträger, die insbesondere als Chipkarten ausgebildet sein können, werden beispielsweise im Bereich des Zahlungsverkehrs, im Mobilfunkbereich, als Ausweisdokumente usw. eingesetzt. Beim Einsatz einer Chipkarte wird in der Regel eine Datenverbindung zu einem externen Kommunikationspartner aufgebaut, über die der Chipkarte vom externen Kommunikationspartner Kommandos übermittelt werden. Hierzu verfügt die Chipkarte über eine Ein-/ Ausgabeschnittstelle, über welche die Kommandos empfangen werden. Die Kommandos triggern die Funktionen im Betriebssystem und in Applikationen der Chipkarte. Entsprechend der sequentiellen Übermittlung der Kommandos werden die Funktionen nacheinander ausgeführt. Somit ist jeweils nur ein Prozess mit einem einzigen Ausführungspfad aktiv.

Mit der Verfügbarkeit immer leistungsfähigerer Mikrocontroller für Chipkarten auf der einen Seite und der steigenden Anzahl und Komplexität von Chipkartenapplikationen auf der anderen Seite besteht zunehmend der Wunsch, eine Parallelverarbeitung, beispielsweise durch ein Multi Tasking, bei Chipkarten zu realisieren.

Es ist Aufgabe der Erfindung einen tragbaren Datenträger so auszubilden, dass er sich insbesondere auch für einen quasi-parallelen Betrieb eignet.

Diese Aufgabe wird durch einen tragbaren Datenträger gemäß Anspruch 1 gelöst.

Der erfindungsgemäße tragbare Datenträger weist eine Prozessoreinheit zur Ausführung von Programmcode, wenigstens eine Ein-/ Ausgabeeinheit wenigstens zum Empfang von Daten und ein Betriebssystem zur Verwaltung mehrerer nebeneinander bestehender Ausführungspfade zur Ausführung von Programmcode durch die Prozessoreinheit auf. Die Besonderheit des erfindungsgemäßen tragbaren Datenträgers besteht darin, dass durch die wenigstens eine Ein-/ Ausgabeeinheit mehrere Kommunikationskanäle bereitgestellt werden, für die je ein Ausführungspfad vorgesehen ist.

Die Erfindung hat den Vorteil, dass sie einen quasi-parallelen Betrieb des tragbaren Datenträgers ermöglicht und somit zu einer hohen Leistungsfähigkeit des tragbaren Datenträgers beiträgt. Dabei ist nicht nur gewährleistet, dass mehrere Ausführungspfade nebeneinander bestehen, sondern auch, dass diese Ausführungspfade nebeneinander mit externen Kommunikationspartnern kommunizieren können.

Die Kommunikationskanäle können wenigstens zeitweise gleichzeitig aktiv sein, so dass mit dem erfindungsgemäßen tragbaren Datenträger mehrere Kommunikationsverbindungen eingegangen werden können, die gleichzeitig aktiv sind.

Eine besonders universelle Einsetzbarkeit des erfindungsgemäßen tragbaren Datenträgers lässt sich dadurch erreichen, dass durch die wenigstens eine Ein-/ Ausgabeeinheit mehrere physikalisch unterschiedliche Kommunikationskanäle bereitgestellt werden. Dadurch wird eine Kommunikation mit verschiedenartig ausgebildeten Kommunikationspartnern ermöglicht. Insbesondere ist wenigstens einer der Kommunikationskanäle für eine kontaktbehaftete und wenigstens einer der Kommunikationskanäle für eine kontaktlose Kommunikation ausgebildet.

Ebenso ist es auch möglich, den erfindungsgemäßen tragbaren Datenträger so auszubilden, dass durch die wenigstens eine Ein-/ Ausgabeeinheit mehrere logische Kommunikationskanäle bereitgestellt werden, die physikalisch gleich ausgebildet sind. Dadurch lässt sich der auf die Ein-/ Ausgabeeinheit entfallende Herstellungsaufwand des tragbaren Datenträgers vergleichsweise gering halten.

Da die Kommunikation gemäß dem TCP/IP-Standard in potentiellen Einsatzgebieten von tragbaren Datenträgern weit verbreitet ist, ist es von Vorteil, wenn wenigstens ein Kommunikationskanal des tragbaren Datenträgers gemäß dem TCP/IP-Standard ausgebildet ist.

Die nebeneinander bestehenden Ausführungspfade können durch Multithreading, Multitasking oder Event-Handling realisiert sein.

Der erfindungsgemäße tragbare Datenträger ist insbesondere als eine Chipkarte ausgebildet.

Die Erfindung bezieht sich weiterhin auf ein Betriebssystem zur Verwaltung mehrerer nebeneinander bestehender Ausführungspfade zur Ausführung von Programmcode durch eine Prozessoreinheit eines tragbaren Datenträgers, der wenigstens eine Ein-/ Ausgabeeinheit wenigstens zum Empfang von Daten aufweist. Das erfindungsgemäße Betriebssystem zeichnet sich dadurch aus, dass es mehreren Kommunikationskanälen, die durch die wenigstens eine Ein-/Ausgabeeinheit bereitgestellt werden, je einen Ausführungspfad zuordnet.

Beim erfindungsgemäßen Verfahren zum Betreiben eines tragbaren Datenträgers werden durch die wenigstens eine Ein-/ Ausgabeeinheit mehrere Kommunikationskanäle bereitgestellt und es wird den Kommunikationskanälen je ein Ausführungspfad zugeordnet.

Im Rahmen des erfindungsgemäßen Verfahrens kann jeweils auf Basis einer Anfrage, die vom externen Kommunikationspartner über einen der Kommunikationskanäle an den tragbaren Datenträger gerichtet wird, ein Ausführungspfad getriggert werden. Durch den im Ausführungspfad ausgeführten Programmcode wird insbesondere eine Kommunikationsverbindung ausgebildet.

Weiterhin kann vorgesehen sein, dass vom externen Kommunikationspartner wenigstens eine Funktionalität des tragbaren Datenträgers aufgerufen wird.

Besonders vorteilhaft ist es, wenn eine direkte Anbindung, insbesondere eine TCP/ IP-Anbindung, des tragbaren Datenträgers an den externen Kommunikationspartner ausgebildet wird. Dies ermöglicht eine schnelle und effiziente Kommunikation zwischen dem externen Kommunikationspartner und dem tragbaren Datenträger. Ebenso ist es auch möglich, eine Protokollkonvertierung in ein vom tragbaren Datenträger verwendetes Übertragungsprotokoll, insbesondere in ein Übertragungsprotokoll gemäß der Norm ISO 7816, durchzuführen. Insbesondere wird die Protokollkonvertierung ausgehend von TCP/IP durchgeführt. Weiterhin kann vorgesehen sein, dass die Kommunikation des externen Kommunikationspartners mit dem tragbaren Datenträger mittels Polling durchgeführt wird.

Der externe Kommunikationspartner kann beispielsweise in ein Netzwerk eingebunden sein und über dieses Netzwerk mit dem tragbaren Datenträger kommunizieren.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/ oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für kontaktlose und/ oder kontaktbehaftete Kommunikation mit einem Lesegerät oder Datenverarbeitungssystem (z.B. Personal Computer, Workstation, Server) haben.

Es zeigen:
- Fig.1: ein Ausführungsbeispiel einer erfindungsgemäß ausgebildeten Chipkarte in einer schematischen Darstellung,
- Fig. 2: eine schematische Darstellung zur Veranschaulichung der Umsetzung der Verbindungsanfragen in verschiedene Ausführungspfade,
- Fig. 3: ein erstes Anwendungsszenario für den Einsatz der Chipkarte,
- Fig. 4: ein zweites Anwendungsszenario für den Einsatz der Chipkarte,
- Fig. 5: eine mögliche Realisierung für die Protokollkonvertierung in APDUs gemäß der Norm ISO 7816,
- Fig. 6: eine schematische Darstellung der Abläufe beim Einsatz eines Polling-Verfahrens und
- Fig. 7: ein drittes Anwendungsszenario für den Einsatz der Chipkarte.

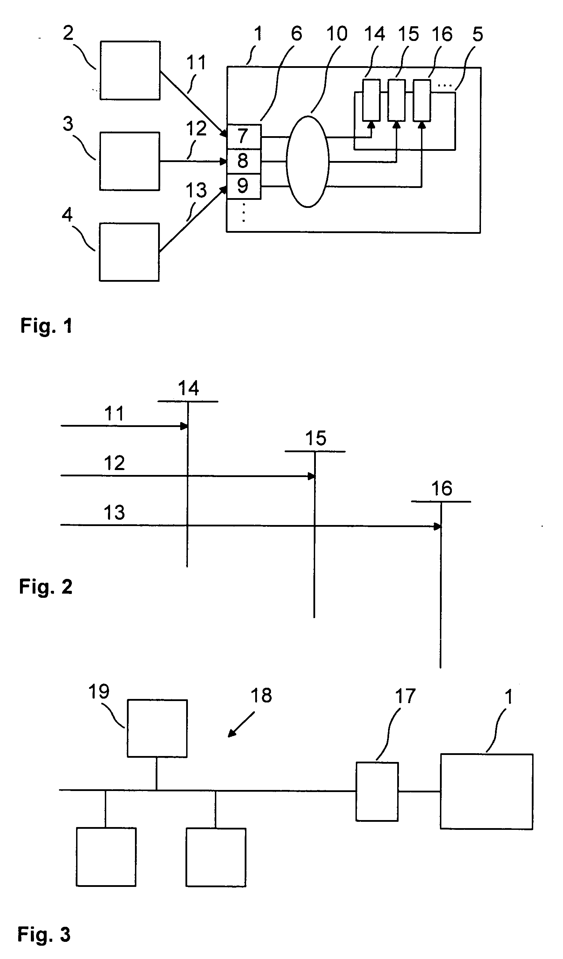

Fig.1 zeigt ein Ausführungsbeispiel einer erfindungsgemäß ausgebildeten Chipkarte 1 in einer schematischen Darstellung. Außerdem sind in Fig. 1 mehrere externe Geräte 2, 3, 4 dargestellt, die mit der Chipkarte 1 kommunizieren. Die Chipkarte 1 weist eine Prozessoreinheit 5 und eine Ein-/Ausgabeeinheit 6 mit mehreren logischen oder physikalischen Kommunikationskanälen 7, 8, 9 auf.

Die Ein-/ Ausgabeeinheit 6 kann für eine kontaktbehaftete oder für eine kontaktlose Datenübertragung ausgebildet sein. Ebenso ist auch eine gemischt ausgebildete Ein-/Ausgabeeinheit 6 möglich, bei der wenigstens je einer der Kommunikationskanäle 7, 8, 9 für eine kontaktbehaftete und einer für eine kontaktlose Datenübertragung vorgesehen ist. Schließlich ist es auch möglich, mehrere Ein-/Ausgabeeinheiten 6 vorzusehen, die jeweils wenigstens einen Kommunikationskanal 7, 8, 9 aufweisen. Die einzelnen Ein-/ Ausgabeeinheiten 6 können dann jeweils für eine kontaktbehaftete oder eine kontaktlose Datenübertragung ausgebildet sein. Außerdem können für die einzelnen Kommunikationskanäle 7, 8, 9 bzw. die einzelnen Ein-/ Ausgabeeinheiten 6 unterschiedliche Kommunikationsprotokolle, wie beispielsweise Universal Serial BUS (USB), ISO 7816, ISO 14443, Near Field Communication (NFC), Internet Protocol (IP), Transmission Control Protocol (TCP) usw. vorgesehen sein. Die Kommunikationsprotokolle können in beliebigen Schichtungen vorgesehen sein.

In Fig. 1 sind weiterhin ein Betriebssystem 10, mehrere Verbindungsanfragen 11,12,13 und mehrere Ausführungspfade 14,15,16 symbolisch dargestellt, auf die im folgenden noch näher eingegangen wird.

Der Chipkarte 1 liegt folgende Funktionsweise zugrunde:

Von den dargestellten Kommunikationskanälen 7, 8, 9 der Ein-/ Ausgabeeinheit 6 wird je eine Verbindungsanfrage 11,12,13 zur Ausbildung einer Kommunikationsverbindung über den jeweiligen Kommunikationskanal 7, 8, 9 empfangen. Die Verbindungsanfragen 11,12,13 stammen von je einem der externen Geräte 2, 3, 4. Wie auch in Fig. 2 dargestellt, triggert jede Verbindungsanfrage 11, 12, 13 je einen Ausführungspfad 14, 15, 16 des Betriebssystems 10. Beispielsweise triggert die Verbindungsanfrage 11 des externen Geräts 2, die vom Kommunikationskanal 7 der Ein-/ Ausgabeeinheit 6 empfangen wird, den Ausführungspfad 14. Die Verbindungsanfrage 12 des externen Geräts 3, die vom Kommunikationskanal 8 der Ein-/Ausgabeeinheit 6 empfangen wird, triggert den Ausführungspfad 15 usw.

Jeder Ausführungspfad 14, 15, 16 entspricht einer Programmausführung, die von der Prozessoreinheit 5 abgewickelt wird und eine Kommunikationsverbindung ausbildet. Somit wird für jede Verbindungsanfrage 11, 12, 13 eine eigene Kommunikationsverbindung ausgebildet. Abhängig vom zeitlichen Aufeinandertreffen der Verbindungsanfragen 11,12,13 können die Ausführungspfade 14, 15, 16 gleichzeitig nebeneinander bestehen. Dies bedeutet, dass eine quasi-parallele Programmausführung erforderlich ist. Dies kann auf unterschiedliche Weise realisiert werden.

Bei einer ersten Variante wird von der Prozessoreinheit 5 der Chipkarte 1 nur ein einziger Prozess ausgeführt. Jede Verbindungsanfrage 11, 12, 13 kommt bei demselben Prozess an und führt zu einem neuen Ausführungspfad 14, 15, 16 innerhalb dieses Prozesses. Dabei ist eine Überlagerung verschiedener Ausführungspfade 14, 15, 16 möglich. Deshalb ist es erforderlich, dass der Programmcode beliebig unterbrochen werden kann, ohne dass dadurch ein Fehler entsteht. Diese Vorgehensweise wird auch als Multithreading bezeichnet.

Bei einer zweiten Variante sind mehrere Prozesse vorgesehen, die quasigleichzeitig ablaufen. Jede Verbindungsanfrage 11, 12, 13 erzeugt einen neuen eigenständigen Prozess, der über eigene, ihm zugewiesene Hardwareressourcen, wie beispielsweise flüchtigen Speicher (RAM) und nicht flüchtigen Speicher (EEPROM), verfügt. In der Darstellung der Fig.1 würde jeder Ausführungspfad 14, 15, 16 einem eigenen Prozess entsprechen. Die zweite Variante wird auch als Multitasking bezeichnet.

Bei einer dritten Variante werden für die verschiedenen Kommunikationsverbindungen jeweils ein Programm oder eine Programmsequenz registriert. Wenn eine Verbindungsanfrage 11,12,13 mit einer bestimmten Kennung eingeht, wird diese Verbindungsanfrage 11,12,13 dem zugehörigen Programm bzw. der zugehörigen Programmsequenz zugewiesen. Eine Überlagerung verschiedener Programme oder Programmsequenzen ist nicht zulässig, so dass eine beliebige Unterbrechbarkeit der Programme oder Programmsequenzen nicht erforderlich ist.

Fig. 2 zeigt eine schematische Darstellung zur Veranschaulichung der Umsetzung der Verbindungsanfragen 11, 12, 13 in verschiedene Ausführungspfade 14, 15, 16. Aus Fig. 2 geht hervor, dass jede Verbindungsanfrage 11, 12, 13 einen jeweils anderen Ausführungspfad 14, 15, 16 triggert. Im Rahmen jedes Ausführungspfads 14,15,16 wird dann die gemäß der Verbindungsanfrage 11, 12, 13 gewünschte Kommunikationsverbindung bereitgestellt.

Die Chipkarte 1 kann bei einer Reihe von Anwendungsszenarien eingesetzt werden, von denen einige im folgenden beispielhaft erläutert werden.

Fig. 3 zeigt ein erstes Anwendungsszenario für den Einsatz der Chipkarte 1. Bei diesem Anwendungsszenario ist die Chipkarte 1, die gemäß Fig. 1 ausgebildet ist, über eine Netzwerkschnittstelle 17 mit einem TCP/IPbasierenden Rechnernetzwerk 18 verbunden, das mehrere Rechner 19 aufweist. Es besteht somit eine direkte TCP/ IP-Anbindung eines der Rechner 19 an die Chipkarte 1. Dadurch ist es beispielsweise möglich, dass von einem dieser Rechner 19 ein Aufruf von Chipkartenfunktionalitäten über Remote Procedure Calls (RPC) durchgeführt wird. Über gängige RPC-Protokolle, wie beispielsweise SOAP, RMI oder CORBA, können unter anderem auch sicherheitskritische Funktionen direkt auf der Chipkarte 1 ausgeführt werden. Beispielsweise kann eine Authentisierung basierend auf gängigen kryptographischen Verfahren, z. B. Challenge-Response-Verfahren, durchgeführt werden. Ebenso kann eine Autorisierung zur Vergabe von Zugriffsrechten für Daten durchgeführt werden, die auf der Chipkarte 1 oder extern gespeichert sind. Eine derartige Autorisierung wird insbesondere im Rahmen eines Digital Rigths Management (DRM) durchgeführt.

Auch eine Verschlüsselung bzw. Entschlüsselung von statischen Daten oder auch eine Strom-Verschlüsselung bzw. Strom-Entschlüsselung von Daten, die über die Ein-/ Ausgabeeinheit 6 kontinuierlich empfangen werden und verschlüsselt oder entschlüsselt weitergeleitet werden, ist möglich. Ebenso können digitale Signaturen erzeugt werden, um Daten mit einer Identität zu verbinden.

Die Protokollsicherheit kann dabei jeweils mit gängigen Verfahren zur Absicherung von Internetkommunikation, wie z. B. SSL/TLS oder IKE mit IPSec realisiert werden. Zusätzlich können eigene Sicherheitsmechanismen im RPC-Protokoll integriert werden, z. B. XML-Signaturen und XML-Verschlüsselung in SOAP.

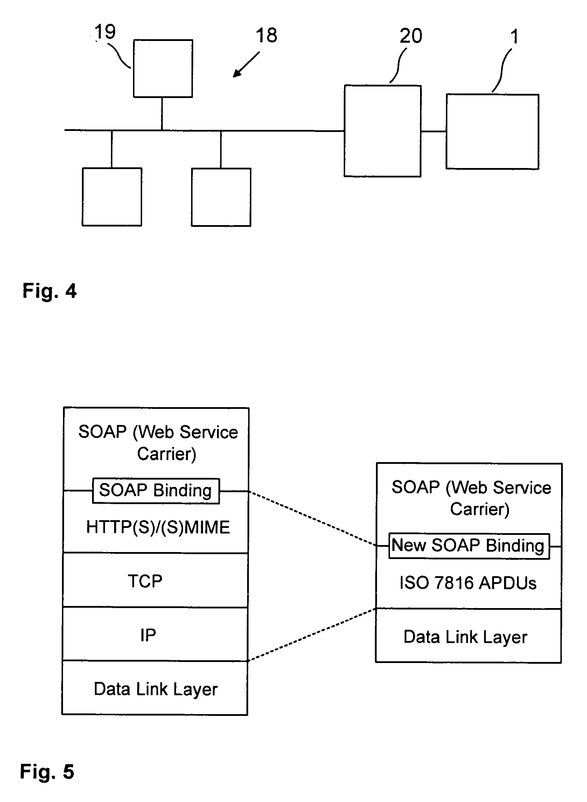

Fig. 4 zeigt ein zweites Anwendungsszenario für den Einsatz der Chipkarte 1. Ähnlich wie beim ersten Anwendungsszenario ist die Chipkarte 1 wiederum an ein auf TCP/IP basierendes Rechnernetzwerk 18 mit mehreren Rechnern 19 angebunden. Beim zweiten Anwendungsszenario erfolgt diese Anbindung allerdings nicht über eine Netzwerkschnittstelle 17, sondern über ein Endgerät 20. Das Endgerät 20 führt eine Protokollkonvertierung in APDUs gemäß der Norm ISO 7816 aus, die von der Chipkarte 1 verarbeitet werden können. Die Protokollkonvertierung kann auf einer beliebigen Ebene im Protokollstack stattfinden. Ein Ausführungsbeispiel hierfür ist in Fig. 5 dargestellt.

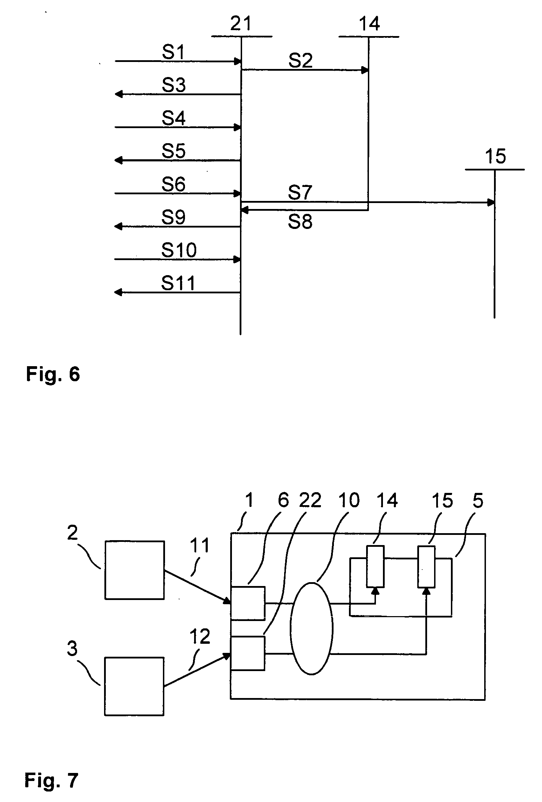

Fig. 5 zeigt eine mögliche Realisierung für die Protokollkonvertierung in APDUs gemäß der Norm ISO 7816. Bei dieser Realisierung wird ein SOAP-Protokoll über APDUs abgewickelt. Dabei ist in der linken Bildhälfte die Situation vor der Protokollkonvertierung und in der rechten Bildhälfte die Situation nach der Protokollkonvertierung dargestellt. Im Rahmen der Protokollkonvertierung wird aus einer SOAP-Binding auf HTTP bzw. MIME eine SOAP-Binding auf APDUs erzeugt. Falls die Chipkarte 1 nur eine einzige physikalische Kommunikationsart unterstützt, wird das in Fig. 6 dargestellte Polling-Verfahren angewendet.

Fig. 6 zeigt eine schematische Darstellung der Abläufe beim Einsatz eines Polling-Verfahrens. Die Kommunikation zwischen der Chipkarte 1 und dem Endgerät 20 wird über ein herkömmliches sequentielles Chipkartenprotokoll abgewickelt. Um dennoch eine quasi-parallele Programmausführung zu ermöglichen, wird die Chipkarte 1 vom Endgerät 20 regelmäßig abgefragt und über einen in der Chipkarte 1 vorgesehen Verteiler 21 werden die verschiedenen Ausführungspfade 14, 15 getriggert. Im einzelnen werden bei der dargestellten beispielhaften Sequenz der Reihe nach folgende Schritte durchgeführt:

In einem ersten Schritt S1 übermittelt das Endgerät 20 ein Polling-Kommando und eine erste Anfrage, die beispielsweise der Verbindungsanfrage 11 aus Fig. 1 entspricht an den Verteiler 21 der Chipkarte 1. Daraufhin wird die Verbindungsanfrage 11 vom Verteiler 21 in einem Schritt S2 weitergeleitet und dadurch der Ausführungspfad 14 getriggert. Auf Schritt S2 folgt ein Schritt S3, in dem der Verteiler 21 dem Endgerät 20 eine Polling-Antwort übermittelt. Danach wird in einem Schritt S4 vom Endgerät 20 ein Polling-Kommando an den Verteiler 21 der Chipkarte 1 übermittelt, der darauf in einem Schritt S5 mit einer Polling-Antwort antwortet.

Im Anschluss an Schritt S5 übermittelt das Endgerät 20 in einem Schritt S6 eine zweite Anfrage an den Verteiler 21 der Chipkarte 1. Bei der zweiten Anfrage kann es sich beispielsweise um die in Fig.1 dargestellte Verbindungsanfrage 12 handeln, die allerdings vom gleichen Gerät, wie die Verbindungsanfrage 11, nämlich dem Endgerät 20, übermittelt wird. Auf Schritt S6 folgt ein Schritt S7, in dem die Verbindungsanfrage 12 vom Verteiler 21 weitergeleitet wird und dadurch der Ausführungspfad 15 getriggert wird. Danach liefert der Ausführungspfad 14 in einem Schritt S8 eine Antwort auf die Verbindungsanfrage 11 an den Verteiler 21. Der Verteiler 21 übermittelt anschließend in einem Schritt S9 eine Polling-Antwort mit der Antwort auf die Verbindungsanfrage 11 an das Endgerät 20. Als nächstes übermittelt das Endgerät 20 in einem Schritt S10 wiederum ein Polling-Kommando an den Verteiler 21 der Chipkarte 1. Der Verteiler 21 antwortet in einem Schritt S11 mit der Übermittlung einer Polling-Antwort an das Endgerät 20.

Weitere Schritte sind in Fig. 6 nicht dargestellt. Die Kommunikation zwischen dem Endgerät 20 und der Chipkarte 1 kann aber entsprechend der vorstehenden Schilderung fortgesetzt werden.

Auf die beschriebene Weise ist es möglich, mehrere parallele Ausführungspfade 14,15 über eine gemeinsame externe Kommunikationsverbindung der Chipkarte 1 zu triggern.

Fig. 7 zeigt ein drittes Anwendungsszenario für den Einsatz der Chipkarte 1. Bei diesem Anwendungsszenario sind außer der Chipkarte 1 die externen Geräte 2 und 3 vorgesehen, wobei das externe Gerät 2 in diesem Fall für eine kontaktbehaftete und das externe Gerät 3 für eine kontaktlose Datenübertragung ausgelegt ist. Die Chipkarte 1 ist so ausgebildet, dass sie neben der Ein-/ Ausgabeeinheit 6, die in diesem Fall für eine kontaktbehaftete Datenübertragung vorgesehen ist, eine weitere Ein-/ Ausgabeeinheit 22 für eine kontaktlose Datenübertragung aufweist. Insbesondere kann die Ein-/ Ausgabeeinheit 6 für eine kontaktbehaftete Datenübertragung gemäß der Norm ISO 7816 oder gemäß dem USB-Standard und die Ein-/ Ausgabeeinheit 22 für eine kontaktlose Datenübertragung gemäß der Norm ISO 14443 oder dem NFC-Standard vorgesehen sein.

Über die beiden Ein-/ Ausgabeeinheiten 6 und 22 kann je ein Ausführungspfad 14 oder 15 getriggert werden. Hierzu wird vom externen Gerät 2 eine Verbindungsanfrage 11 über eine galvanische Verbindung an die Ein-/ Ausgabeeinheit 6 der Chipkarte 1 übermittelt. Vom externen Gerät 3 wird eine Verbindungsanfrage 12 kontaktlos an die Ein-/ Ausgabeeinheit 22 der Chipkarte 1 übermittelt. Die Verbindungsanfragen 11 und 12 triggern in der bereits beschriebenen Weise die Ausführungspfade 14 und 15.

## Patentansprüche

1. Tragbarer Datenträger, mit
- einer Prozessoreinheit (5) zur Ausführung von Programmcode,
- wenigstens einer Ein-/ Ausgabeeinheit (6, 22) wenigstens zum Empfang von Daten und
- einem Betriebssystem (10) zur Verwaltung mehrerer nebeneinander bestehender Ausführungspfade (14, 15, 16) zur Ausführung von Programmcode durch die Prozessoreinheit (5),
**dadurch gekennzeichnet, dass**
durch die wenigstens eine Ein-/ Ausgabeeinheit (6, 22) mehrere Kommunikationskanäle (7, 8, 9) bereitgestellt werden, für die je ein Ausführungspfad (14, 15, 16) vorgesehen ist.

2. Tragbarer Datenträger nach Anspruch 1, **dadurch gekennzeichnet, dass** die Kommunikationskanäle (7, 8, 9) wenigstens zeitweise gleichzeitig aktiv sind.

3. Tragbarer Datenträger nach einem der vorhergehenden Ansprüche, **dadurch gekennzeichnet, dass** durch die wenigstens eine Ein-/ Ausgabeeinheit (6, 22) mehrere physikalisch unterschiedliche Kommunikationskanäle (7, 8, 9) bereitgestellt werden.

4. Tragbarer Datenträger nach einem der vorhergehenden Ansprüche, **dadurch gekennzeichnet, dass** wenigstens einer der Kommunikationskanäle (7, 8, 9) für eine kontaktbehaftete und wenigstens einer der Kommunikationskanäle (7, 8, 9) für eine kontaktlose Kommunikation ausgebildet ist.

5. Tragbarer Datenträger nach einem der vorhergehenden Ansprüche, **dadurch gekennzeichnet, dass** durch die wenigstens eine Ein-/ Ausgabeeinheit (6, 22) mehrere logische Kommunikationskanäle (7, 8, 9) bereitgestellt werden, die physikalisch gleich ausgebildet sind.

6. Tragbarer Datenträger nach einem der vorhergehenden Ansprüche, **dadurch gekennzeichnet, dass** wenigstens ein Kommunikationskanal (7, 8, 9) gemäß dem TCP/IP-Standard ausgebildet ist.

7. Tragbarer Datenträger nach einem der vorhergehenden Ansprüche, **dadurch gekennzeichnet, dass** die Ausführungspfade (14,15,16) durch Multithreading, Multitasking oder Event-Handling realisiert sind.

8. Tragbarer Datenträger nach einem der vorhergehenden Ansprüche, **dadurch gekennzeichnet, dass** er als eine Chipkarte ausgebildet ist.

9. Betriebssystem zur Verwaltung mehrerer nebeneinander bestehender Ausführungspfade (14, 15, 16) zur Ausführung von Programmcode durch eine Prozessoreinheit (5) eines tragbaren Datenträgers (1), der wenigstens eine Ein-/ Ausgabeeinheit (6, 22) wenigstens zum Empfang von Daten aufweist, **dadurch gekennzeichnet, dass** das Betriebssystem (10) mehreren Kommunikationskanälen (7, 8, 9), die durch die wenigstens eine Ein-/ Ausgabeeinheit (6, 22) bereitgestellt werden, je einen Ausführungspfad (14,15,16) zuordnet.

10. Verfahren zum Betreiben eines tragbaren Datenträgers (1), der
- eine Prozessoreinheit (5) zur Ausführung von Programmcode,
- wenigstens eine Ein-/ Ausgabeeinheit (6, 22) wenigstens zum Empfang von Daten von einem externen Kommunikationspartner (2, 3, 4, 19) oder von mehreren externen Kommunikationspartnern (2, 3, 4, 19) und
- ein Betriebssystem (10) zur Verwaltung mehrerer nebeneinander bestehender Ausführungspfade (14, 15, 16) zur Ausführung von Programmcode durch die Prozessoreinheit (5) aufweist,
**dadurch gekennzeichnet, dass**
durch die wenigstens eine Ein-/ Ausgabeeinheit (6, 22) mehrere Kommunikationskanäle (7, 8, 9) bereitgestellt werden und den Kommunikationskanälen (7, 8, 9) je ein Ausführungspfad (14, 15, 16) zugeordnet wird.

11. Verfahren nach Anspruch 10, **dadurch gekennzeichnet, dass** jeweils auf Basis einer Anfrage (11,12,13), die vom externen Kommunikationspartner (2, 3, 4, 19) über einen der Kommunikationskanäle (7, 8 ,9) an den tragbaren Datenträger (1) gerichtet wird, ein Ausführungspfad (14, 15, 16) getriggert wird.

12. Verfahren nach einem der Ansprüche 10 oder 11, **dadurch gekennzeichnet, dass** durch den im Ausführungspfad (14,15,16) ausgeführten Programmcode eine Kommunikationsverbindung (7, 8, 9) ausgebildet wird.

13. Verfahren nach einem der Ansprüche 10 bis 12, **dadurch gekennzeichnet, dass** vom externen Kommunikationspartner (2, 3, 4, 19) wenigstens eine Funktionalität des tragbaren Datenträgers (1) aufgerufen wird.

14. Verfahren nach einem der Ansprüche 10 bis 13, **dadurch gekennzeichnet, dass** eine direkte Anbindung, insbesondere eine TCP/IP-Anbindung, des tragbaren Datenträgers (1) an den externen Kommunikationspartner (2, 3, 4, 19) ausgebildet wird.

15. Verfahren nach einem der Ansprüche 10 bis 13, **dadurch gekennzeichnet, dass** eine Protokollkonvertierung in ein vom tragbaren Datenträger (1) verwendetes Kommunikationsprotokoll, insbesondere in ein Kommunikationsprotokoll gemäß der Norm ISO 7816, durchgeführt wird.

16. Verfahren nach Anspruch 15, **dadurch gekennzeichnet, dass** die Protokollkonvertierung ausgehend von TCP/IP durchgeführt wird.

17. Verfahren nach einem der Ansprüche 15 oder 16, **dadurch gekennzeichnet, dass** die Kommunikation des externen Kommunikationspartners (2, 3, 4, 19) mit dem tragbaren Datenträger (1) mittels Polling durchgeführt wird.

18. Verfahren nach einem der Ansprüche 10 bis 17, **dadurch gekennzeichnet, dass** der externe Kommunikationspartner (19) in ein Netzwerk (18) eingebunden ist und über dieses Netzwerk (18) mit dem tragbaren Datenträger (1) kommuniziert.
